# EUROPEAN PATENT APPLICATION

(11) **EP 2 293 264 A1**
(43) Date of publication of application: **09.03.2011**
(21) Application number: 09832892.5
(22) Date of filing: 05.11.2009
(51) Int. Cl.: G07F 9/02

(54) **ANIMATION EMBEDDED AUTOMATIC VENDING MACHINE**

(30) Priority: 16.12.2008 CN 200810220091
(71) Applicant: Foshan Nanhai Cornucopia Digital Electric Co., Ltd, Guangdong 528200 (CN)
(72) Inventor: GUAN, Jianwen, Foshan Guangdong 528200 (CN); LIN, Defang, Foshan Guangdong 528200 (CN); LIU, Zhishang, Foshan Guangdong 528200 (CN)
(74) Representative: Beck & Rössig European Patent Attorneys
(86) International application number: PCT/CN2009/074796
(87) International publication number: WO 2010/069210

(57) **Abstract**

An animation embedded automatic vending machine is provided, comprising: a core board having a chip with high video playing capability; a 3D animation system for simulating the scene of a customer entering into a store to do shopping; a sales system supporting charge, computation, data storage and financial report printing; the 3D animation system is embedded into a shopping procedure control module; the sales system is connected to corresponding ports of the core board respectively, a display screen arranged on a man-machine interaction interface of the automatic vending machine, and a FPGA control bottom board, are connected to the core board of the automatic vending machine respectively, and the FPGA control bottom board instructs a delivery executing mechanism of the automatic vending machine to deliver the goods selected via the animation window. With the technical solution of the present invention, the automatic vending machine utilizes 3D animations displayed on the screen to show attributes of goods stored in the machine, and provides animation man-machine interface for customers to select goods and make payment, meanwhile guide the customers with the operation procedure, therefore a intelligent sales system having man-machine interaction is achieved.

## Description

### FIELD OF THE INVENTION

The present invention relates to an animation embedded automatic vending machine.

### BACKGROUND OF THE INVENTION

Automatic vending machines are popular in beverage and gasoline supply industries. The automatic vending machines are generally located at places with many people and high traffic, which is convenient for the pedestrian and brings business opportunities for the area. Currently, there are numerous types of single vending machines. However they are all quite similar. The operation guide for purchasing is mostly in the manner of graphic or text description, and the variety of the goods is quite few. Some other vending machines use display screen to show the goods and the operation guide by displaying static pictures on the screen. The hardware installed in the vending machines is limited, mainly used on implementing simple functional process such as purchasing, charging and delivery. Due to the limitation of the computational capacity of the hardware in the machines, these machines cannot analyze statistics on sales and report the financial management information generated during the sales procedures. It also cannot control the goods delivery. The feedback signal is also limited. These vending machines cannot deliver goods simultaneously through a plurality of transfer channels. Therefore, most of the automatic vending machines presently arranged in the public places, for example the coffee or other beverage machines, the condom vending machines, which sell a single kind of goods only, and they have few transfer channels, mostly below 40 transfer channels. Interface for promotion and selling is provided through static pictures.

### SUMMARY OF THE INVENTION

With an aim to change the man-machine interface via static unitary images of the single vending machine in the prior art, the present invention provides an animation embedded automatic vending machine, which uses large display screen to display 3D images of the goods in the machine, combined with a multi-level shopping operation guide, thereby moving animation scene is shown on the presentation window, instead of the static presentation window and shopping guide on the conventional vending machines.

In one aspect of the present invention, an animation embedded automatic vending machine is provided, comprising: a core board of the automatic vending machine, having a chip with high video playing capability; a 3D animation system for simulating the scene of a customer entering into a store to do shopping; a sales system supporting charge, computation, data storage and financial report printing; the 3D animation system for simulating the scene of a customer entering into a store to do shopping is embedded into a shopping procedure control module; the shopping procedure control module and the sales system supporting charge, computation, data storage and financial report printing, are connected to corresponding ports of the core board respectively, and software programs in the shopping procedure control module and in the sales system are loaded into the operating system through the core board; a display screen capable of playing video files with high resolution, arranged on a man-machine interaction interface of the automatic vending machine, and a FPGA control bottom board, are connected to the core board of the automatic vending machine respectively, wherein the display screen is operated as a peripheral hardware of the core board, and the FPGA control bottom board instructs a delivery executing mechanism of the automatic vending machine to deliver the goods selected via the animation window.

With the technical solution of the present invention, the automatic vending machine utilizes 3D animations displayed on the screen to show attributes of goods stored in the machine, and provides animation man-machine interface for customers to select goods and make payment, meanwhile guide the customers with the operation procedure, therefore a intelligent sales system having man-machine interaction is achieved.

### BRIEF DESCRIPTION OF THE DRAWINGS

The accompanying drawings illustrate one or more embodiments of the invention and, together with the written description, serve to explain the principles of the invention, and wherein:

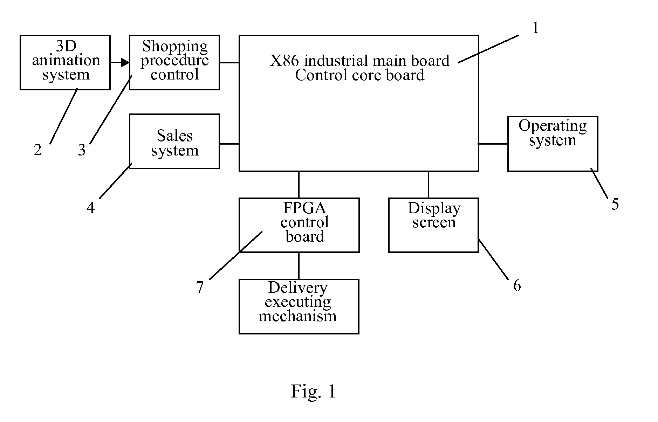

Fig. 1 is a block diagram of a system in accordance with an embodiment of the present invention.

### DETAILED DESCRIPTION OF THE INVENTION

These and other aspects of the present invention will become apparent from the following description of the preferred embodiment taken in conjunction with the following drawings. It should be understood that the embodiments described here are only for the purposes of illustration and description and is not intended to be exhaustive or to limit the invention to the precise forms disclosed.

An animation embedded automatic vending machine in accordance with an embodiment of the present invention is shown in Fig.1. The automatic vending machine comprises: a core board 1 of the automatic vending machine, having a X86 chip with high video playing capability; a 3D animation system 2 for simulating the scene of a customer entering into a store to do shopping; a sales system 4 supporting charge, computation, data storage and financial report printing; the 3D animation system 2 for simulating the scene of a customer entering into a store to do shopping is embedded into a shopping procedure control module 3; the shopping procedure control module 3 and the sales system 4 supporting charge, computation, data storage and financial report printing, are connected to corresponding ports of the core board 1 respectively, and software programs in the shopping procedure control module 3 and in the sales system 4 are loaded into the operating system 5 through the core board 1;at the same time, a display screen 6 capable of playing video files with high resolution above 800x 600, arranged on a man-machine interaction interface of the automatic vending machine, and a FPGA control bottom board 7, are connected to the core board 1 of the automatic vending machine respectively, wherein the display screen 6 is operated as a peripheral hardware of the core board, and the FPGA control bottom board 7 instructs a delivery executing mechanism of the automatic vending machine to deliver the goods selected via the animation window.

The foregoing description of the exemplary embodiments of the invention has been presented only for the purposes of illustration and description and is not intended to be exhaustive or to limit the invention to the precise forms disclosed. Many modifications and variations are possible in light of the above teaching without departing from the protection scope of the present invention.

## Claims

1. An animation embedded automatic vending machine, comprising:
a core board (1) of the automatic vending machine, having a chip with high video playing capability;
a 3D animation system (2) for simulating the scene of a customer entering into a store to do shopping;
a sales system (4) supporting charge, computation, data storage and financial report printing;
the 3D animation system (2) for simulating the scene of a customer entering into a store to do shopping is embedded into a shopping procedure control module (3);
the shopping procedure control module (3) and the sales system (4) supporting charge, computation, data storage and financial report printing, are connected to corresponding ports of the core board (1) respectively, and software programs in the shopping procedure control module (3) and in the sales system (4) are loaded into an operating system (5) through the core board (1);
a display screen (6) capable of playing video files with high resolution, arranged on a man-machine interaction interface of the automatic vending machine, and a FPGA control bottom board (7), are connected to the core board (1) of the automatic vending machine respectively, wherein the display screen (6) is operated as a peripheral hardware of the core board, and the FPGA control bottom board (7) instructs a delivery executing mechanism of the automatic vending machine to deliver the goods selected via the animation window.
